# EUROPEAN PATENT APPLICATION

(11) **EP 4 502 853 A1**
(43) Date of publication of application: **05.02.2025**
(21) Application number: 23790972.6
(22) Date of filing: 22.03.2023
(51) Int. Cl.: G06F 30/17

(54) **DOUBLE-POINT INCREMENTAL FORMING MANUFACTURING METHOD AND APPARATUS, AND ELECTRONIC DEVICE**

(30) Priority: 19.04.2022 CN 202210410288
(71) Applicant: Hankaisi Intelligent Technology Co., Ltd., Guizhou, Guiyang, Guizhou 550000 (CN)
(72) Inventor: CUI, Qiang, Guiyang, Guizhou 550000 (CN); HE, Mengxi, Guiyang, Guizhou 550000 (CN); HE, Sizhong, Guiyang, Guizhou 550000 (CN); YANG, Daoqian, Guiyang, Guizhou 550000 (CN); LI, Jiangshan, Guiyang, Guizhou 550000 (CN); YU, Chuan, Guiyang, Guizhou 550000 (CN); PAWAR, Siddharth Suhas, Pune, Maharashtra 411001 (IN)
(74) Representative: Range, Christopher William
(86) International application number: PCT/CN2023/083016
(87) International publication number: WO 2023/202311

(57) **Abstract**

Provided in the present invention are a double-point incremental forming manufacturing method and apparatus, and an electronic device. The method comprises: acquiring a three-dimensional model of a part to be formed; slicing and layering the three-dimensional model to acquire a plurality of 2D curve paths, and respectively generating a master working path of a master robot according to each 2D curve path; and for each master working path, determining and generating a support path of a slave robot according to the master working path and the shape of the three-dimensional model; and processing and manufacturing said part according to the master working path and the support path and by applying a double-point incremental forming method. The present invention can effectively improve the precision of a formed part in a timely manner, and reduce the experiment cost.

## Description

### Technical Field

The present disclosure belongs to the technical field of double-point incremental forming, and particularly relates to a double-point incremental forming manufacturing method, an apparatus, and an electronic device.

### Background Art

Incremental forming is a flexible manufacturing technique, which can work out target parts without a special mold. A hemispherical tool is attached to a robot arm or CNC machine tool in the incremental forming. The tool is moved along a pre-programmed path, causing local plastic deformations of a metal sheet to make the metal sheet into a desired shell shape. Double-point incremental forming uses two hemispherical forming tools to achieve local incremental deformations of a material and obtain final formed parts. However, this technique has many drawbacks, the main one of which is a low geometric accuracy of the forming result and a small forming range, which limit its wide industrial application. At present, methods for improving the accuracy of incremental forming are mainly directed to compensate the measured rebound amount of the material and it is hard to optimize in terms of the control of forming.

### Summary of the Invention

The present disclosure provides a manufacturing method with double-point incremental forming, an apparatus, and an electronic device, in order to solve the problem of low accuracy of the existing double-point incremental forming in the prior art.

Based on the above object, an embodiment of the present disclosure provides a manufacturing method with double-point incremental forming, comprising: acquiring a three-dimensional model of a part to be formed; slicing and layering the three-dimensional model to obtain a plurality of 2D curve paths, and respectively generating a primary working path of a master robot according to each 2D curve path; for each primary working path, determining and generating a support path of a slave robot according to the primary working path and the shape of the three-dimensional model; and processing and manufacturing the part to be formed by applying a double-point incremental forming method according to the primary working path and the support path.

Optionally, the step of slicing and layering the three-dimensional model to obtain a plurality of 2D curve paths comprises: layering the three-dimensional model along a forming direction according to a preset thickness by applying an offset on surface function, to establish a plurality of 2D curve paths.

Optionally, the preset thickness is determined by the size of a forming tool head and is between 0.5 to 2 mm.

Optionally, the step of generating a primary working path of a master robot according to the 2D curve path comprises: dividing the 2D curve path into a plurality of discrete points at a preset interval, and establishing a series of planes according to a direction of tangent plane of each discrete point in the curve, wherein the discrete points are central points of the planes; setting the center points of the planes as the moving positions of the forming tool head, and setting normal Z-axes of the planes as the forming directions of the forming tool head; and gathering the moving positions of all the discrete points in the 2D curve path and the forming directions corresponding to the moving positions to form the primary working path of the master robot.

Optionally, the step of determining and generating a support path of a slave robot according to the primary working path and the shape of the three-dimensional model comprises: selecting a support strategy from a plurality of pre-stored candidate supporting strategies according to the primary working path and the shape of the three-dimensional model; and generating the support path of the slave robot in accordance with the selected support strategy according to the primary working path and the shape of the three-dimensional model.

Optionally, the support path comprises: at least one of a local front support path, a local peripheral support path, a global support path and a following support path.

Optionally, the step of processing and manufacturing the part to be formed by applying a double-point incremental forming method according to the primary working path and the support path comprises: controlling the forming tool head of the master robot to move according to the primary working path, while controlling a support tool head of the slave robot to move according to the support path, so as to finish the processing and manufacturing of the part to be formed.

Based on the same inventive concept, an embodiment of the present disclosure further provides a manufacturing apparatus with double-point incremental forming, which comprises: a model acquisition unit, configured for acquiring a three-dimensional model of a part to be formed; a primary path acquisition unit, configured for slicing and layering the three-dimensional model to obtain a plurality of 2D curve paths, and respectively generating a primary working path of a master robot according to each 2D curve path; a support path acquisition unit, configured for determining and generating a support path of a slave robot according to the primary working path and the shape of the three-dimensional model for each primary working path; and a double-point processing and manufacturing unit, configured for processing and manufacturing the part to be formed by applying a double-point incremental forming method according to the primary working path and the support path.

Based on the same inventive concept, an embodiment of the present disclosure further provides an electronic device, which comprises a memory, a processor and a computer program stored in the memory and executable on the processor, wherein the processor implements the aforementioned method when it executes the program.

Based on the same inventive concept, an embodiment of the present disclosure further provides a computer storage medium on which at least one executable instruction is stored, the executable instruction instructs a processor to execute the aforementioned method.

The present disclosure has the following beneficial effects: as can be seen from the above description, embodiments of the present disclosure provide a manufacturing method with double-point incremental forming, an apparatus, and an electronic device. The method comprises: acquiring a three-dimensional model of a part to be formed; slicing and layering the three-dimensional model to obtain a plurality of 2D curve paths, and respectively generating a primary working path of a master robot according to each 2D curve path; determining and generating a support path of a slave robot according to the primary working path and the shape of the three-dimensional model for each primary working path; and processing and manufacturing the part to be formed by applying a double-point incremental forming method according to the primary working path and the support path. The present disclosure can effectively improve the precision of a formed part in a timely manner, and reduce the experimental cost.

### Brief Description of Drawings

To make the technical solution in the embodiments of the present disclosure or in the prior art understood better, the accompanying drawings used in the description of the embodiments or the prior art will be introduced below briefly. Apparently, the accompanying drawings described below only illustrate some embodiments of the present disclosure. Those having ordinary skills in the art can obtain drawings of other embodiments on the basis of these drawings without expending any creative labor.
FIG. 1 is a schematic flowchart of a manufacturing method with double-point incremental forming in an embodiment of the present disclosure;
FIG. 2 is a schematic diagram of a local front support strategy in an embodiment of the present disclosure;
FIG. 3 is a schematic diagram of a local peripheral support strategy in an embodiment of the present disclosure;
FIG. 4 is a schematic diagram of a global support strategy in an embodiment of the present disclosure;
FIG. 5 is a schematic diagram of a following support strategy in an embodiment of the present disclosure;
FIG. 6 is a schematic diagram of double-point incremental forming in an embodiment of the present disclosure;
FIG. 7 is a schematic structural diagram of a manufacturing apparatus with double-point incremental forming in an embodiment of the present disclosure; and
FIG. 8 is a schematic diagram of an electronic device in an embodiment of the present disclosure.

### Detailed Description of Embodiments

To make the objective, technical solution and advantages of the present disclosure understood more clearly, the present disclosure will be further detailed below in conjunction with embodiments, with reference to the accompanying drawings.

It should be noted that, unless otherwise defined, the technical terms or scientific terms used in the embodiments of the present disclosure should have their ordinary meanings as understood by those having ordinary skills in the art to which this disclosure belongs. The words "first", "second" and the like used in the embodiments of the present disclosure do not indicate any order, quantity or importance, but are only used to distinguish different constituent parts. Words such as "comprise" or "include" or their variants mean that the elements or objects appearing before the word encompass the elements or objects listed after the word and their equivalents, without excluding other elements or objects. Words such as "connect" or "interconnect" or their variants are not limited to physical or mechanical connections, but may further include electrical connections, no matter whether such connections are direct ones or indirect ones. Words such as 'top", "bottom", "left", "right" and the likes are only used to indicate a relative positional relationship, and the relative positional relationship may vary accordingly with the variation of the absolute positions of the described obj ects.

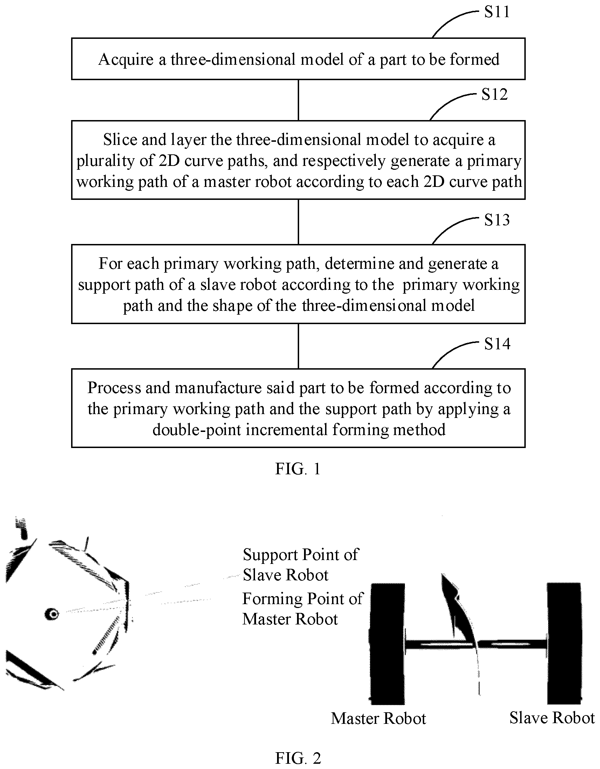

An embodiment of the present disclosure provides a manufacturing method with double-point incremental forming. As shown in FIG. 1, the manufacturing method with double-point incremental forming comprises:
step S11: acquiring a three-dimensional model of a part to be formed;
   The manufacturing method with double-point incremental forming in the embodiment of the present disclosure is applied to a robot control system for controlling a master robot and a slave robot to perform double-point incremental forming. The robot control system is in the hardware, two KUKA KR-210 robots cooperate with each other to accomplish the double-point incremental forming manufacturing. In the step S11, a three-dimensional curved surface model is imported into a Rhino-based Grasshopper programming environment.
step S12: slicing and layering the three-dimensional model to obtain a plurality of 2D curve paths, and respectively generating a primary working path of a master robot according to each 2D curve path;
Optionally, the three-dimensional model is sliced and layered along a forming direction according to a preset thickness by applying an offset on surface function, to establish a plurality of 2D curve paths. Wherein, the preset thickness is determined by the size of the forming tool head, and the preset thickness is preferably selectable between 0.5 to 2 mm. The forming direction may also be selected freely. For example, if the X-axis direction is selected as the forming direction, the three-dimensional model may be sliced and layered along the X-axis direction according to a preset thickness by using the offset on surface function in the step S12 to obtain a plurality of 2D curve paths.

In the embodiment of the present disclosure, after a plurality of 2D curve paths are obtained, each 2D curve path is divided into a plurality of discrete points according to a preset interval, and a series of planes are established according to a tangent plane direction of each discrete point in the curve, wherein the discrete points are central points of the planes; the center points of the planes are set as the moving positions of the forming tool head, and normal Z-axes of the planes are set as the forming directions of the forming tool head; and the moving positions of all the discrete points in the 2D curve path and the forming directions corresponding to the moving positions are gathered to form the primary working path of the master robot. The preset internal may be set as required, and the preset internal is generally preferably within 1 to 3 mm.

step S13: determining and generating a support path of a slave robot according to the primary working path and the shape of the three-dimensional model for each primary working path;
Optionally, a support strategy is selected from a plurality of pre-stored candidate support strategies according to the primary working path and the shape of the three-dimensional model; and the support path of the slave robot is generated in accordance with the selected support strategy according to the primary working path and the shape of the three-dimensional model. The support path comprises: at least one of a local front support path, a local peripheral support path, a global support path and a following support path. The support strategies comprise: a local front support strategy, a local peripheral support strategy, a global support strategy and a following support strategy.

In the embodiment of the present disclosure, according to the local front support strategy, as shown in FIG. 2, the path of the forming area is mirrored with reference to the plane of the metal sheet surface, and the plane of the path points is reversed, to generate a local front support path. The local front support strategy is that the support tool head of the slave robot directly follows the forming tool head of the master robot at the opposite side. If it is determined that the part to be formed has concave areas and convex areas in the forming part along the primary working path according to the primary working path and the three-dimensional model, a local front support strategy is selected, and a local front support path is generated according to the local front support strategy and the primary working path.

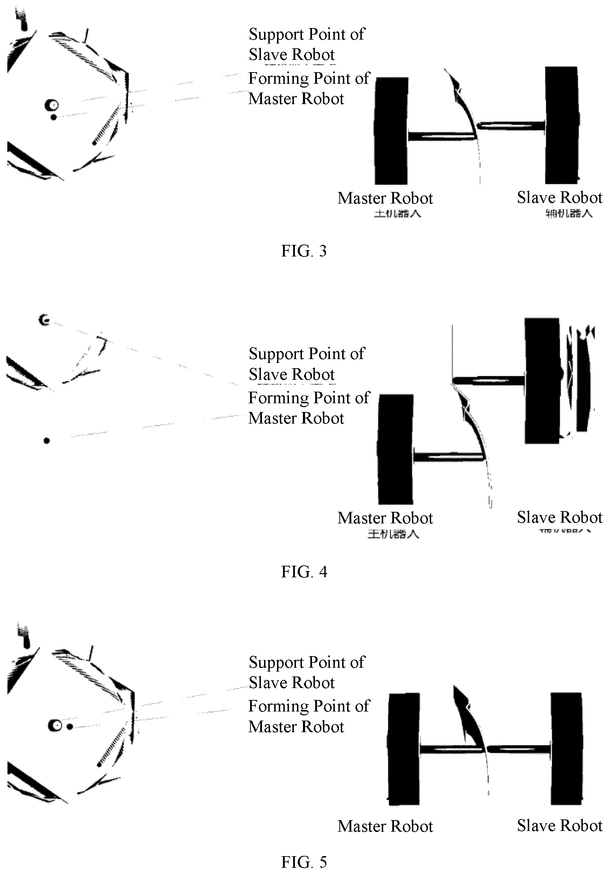

According to the local peripheral support strategy, as shown in FIG. 3, the following support path is shifted backward by one layer, to generate a local peripheral support path. The local peripheral support strategy is that the support tool head of the slave robot directly follows an opposite offset path of the forming tool head of the master robot, and a forming gap is formed between the forming tools. If it is determined that the part to be formed has a sharp portion in the forming portion along the primary working path according to the primary working path and the three-dimensional model, for example, the intersection angle of the sharp portion is smaller than a preset intersection angle, a local peripheral support strategy is selected, and a local peripheral support path is generated according to the local peripheral support strategy and the primary working path.

According to the global support strategy, as shown in FIG. 4, the outer contour of the forming area is shifted by a distance (equal to the radius size of the forming tool head) to generate a global support curve, and the forming path points are mapped to the global support curve to generate a global support path. That is to say, the global support strategy is that the slave robot moves the support tool head along the boundary of the part. The global support strategy is used by default.

According to the following support strategy, as shown in FIG. 5, the path of the forming area is mirrored with reference to the plane of the metal sheet surface, the plane of the path points is reversed, and the list of the path points is shifted forward by three items, to generate a following support path. It should be noted that a series of discrete points will be generated for each path, and a distance created by offsetting by 3 points is approximately equal to the diameter of the forming tool head. Thus, the following support strategy is that the support tool head of the slave robot lags behind the forming tool head of the master robot by a preset distance under the condition of local front support, the preset distance may be set as required, and the preset distance is preferably the diameter of the forming tool head.

In the embodiments of the present disclosure, the four support strategies have their own advantages and disadvantages. The local support strategies can enhance the forming of local details, but will have a greater overall error; the global support strategy can unify the overall error, but has greater forming errors of the details; the following support strategy can improve the surface quality of the forming. In the forming process, concave shapes and convex shapes can be formed in the same part by exchanging the master and slave roles of the robots.

step S 14: processing and manufacturing the part to be formed by applying a double-point incremental forming method according to the primary working path and the support path.

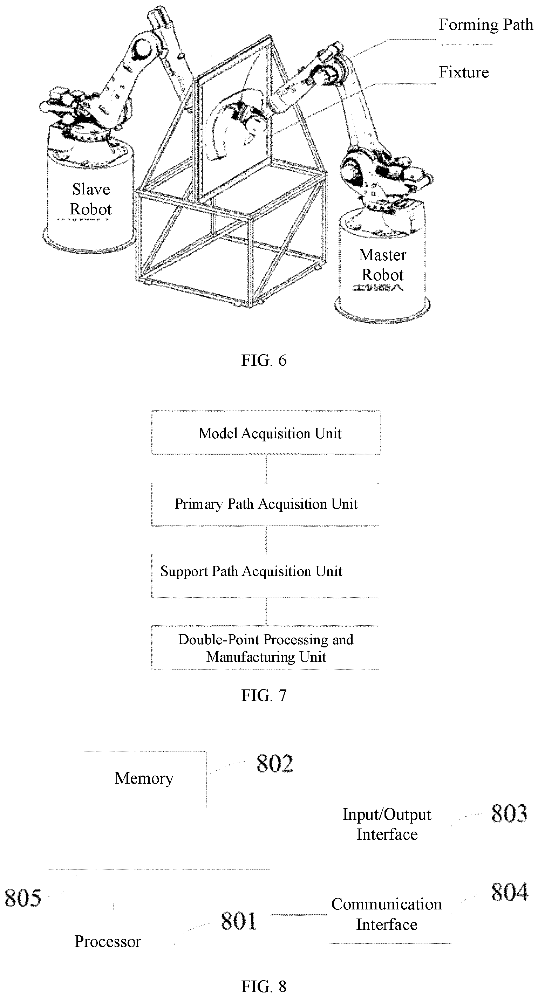

Specifically, the forming tool head of the master robot is controlled to move according to the primary working path, while the support tool head of the slave robot is controlled to move according to the support path, so as to finish the processing and manufacturing of the part to be formed. As shown in FIG. 6, the metal sheet is fixed by fixtures, and the forming tool head of the master robot and the support tool head of the slave robot are controlled to move according to the directions of the primary working path and the support path respectively, and the forming path is consistent with the primary working path. When the master robot performs the forming work, the metal sheet gradually produces local plastic deformation along the direction of the tool path.

In the manufacturing method with double-point incremental forming in the embodiments of the present disclosure, a three-dimensional model of a part to be formed is acquired; the three-dimensional model is sliced and layered to obtain a plurality of 2D curve paths, and a primary working path of a master robot is respectively generated according to each 2D curve path; a support path of a slave robot is determined and generated according to the primary working path and the shape of the three-dimensional model for each primary working path; and the part to be formed is processed and manufactured by applying a double-point incremental forming method according to the primary working path and the support path. The present disclosure can effectively improve the precision of the formed part in a timely manner, and reduce the experimental cost.

Specific embodiments of the present disclosure are described above. In some cases, the actions or steps recorded in the embodiments of the present disclosure may be performed in an order different from that in the embodiments and still can achieve the desired results. In addition, the processes depicted in the accompanying drawings may not necessarily require the illustrated specific order or sequential order to achieve the desired results. In some embodiments, multi-task processing and parallel processing are also possible or may be advantageous.

Based on the same inventive concept, an embodiment of the present disclosure further provides a manufacturing apparatus with double-point incremental forming. As shown in FIG. 7, the manufacturing apparatus with double-point incremental forming comprises: a model acquisition unit, a primary path acquisition unit, a support path acquisition unit and a double-point processing and manufacturing unit. Wherein,
the model acquisition unit is configured for acquiring a three-dimensional model of a part to be formed;
the primary path acquisition unit is configured for slicing and layering the three-dimensional model to obtain a plurality of 2D curve paths, and respectively generating a primary working path of a master robot according to each 2D curve path;
the support path acquisition unit is configured for determining and generating a support path of a slave robot according to the primary working path and the shape of the three-dimensional model for each primary working path; and
the double-point processing and manufacturing unit is configured for processing and manufacturing the part to be formed by applying a double-point incremental forming method according to the primary working path and the support path.

For the convenience of description, the above apparatus is described in various modules for the functions. Of course, in the implementation of an embodiment of the present disclosure, the functions of the modules may be implemented in the same entity of software and/or hardware or in different entities of software and/or hardware.

The apparatus in the above embodiment is applied to the corresponding method in the above embodiments, and has the beneficial effects of the corresponding method embodiment, which will not be described in detail here.

Based on the same inventive concept, an embodiment of the present disclosure further provides an electronic device, the electronic device comprises a memory, a processor and a computer program stored in the memory and executable on the processor, wherein the processor implements the method described in any of the above embodiments when it executes the program.

An embodiment of the present disclosure provides a nonvolatile computer storage medium on which at least one executable instruction is stored, the computer executable instruction can execute the method described in any of the above embodiments.

FIG. 8 shows a more specific schematic structural diagram of the hardware of an electronic device provided in this embodiment. The electronic device may comprise: a processor 801, a memory 802, an input/output interface 803, a communication interface 804 and a bus 805, wherein internal communication connections between the processor 801, the memory 802, the input/output interface 803 and the communication interface 804 are implemented through the bus 805.

The processor 801 may be implemented with a general-purpose central processing unit (CPU), a microprocessor, an application specific integrated circuit (ASIC), or one or more integrated circuits, etc., and is used for executing related programs to implement the technical solution provided in the method embodiment of the present disclosure.

The memory 802 may be implemented in the form of read-only memory (ROM), random access memory (RAM), static memory, or dynamic memory, etc. The memory 802 can store an operating system and other application programs. When the technical solution provided in the method embodiment of the present disclosure is implemented by software or firmware, related program codes are stored in the memory 802 and invoked and executed by the processor 801.

The input/output interface 803 is configured to connect input/output modules to realize information input and output. The input/output modules may be configured as components in the device (not shown in the figure), or may be externally connected to the device to provide corresponding functions. Wherein input devices may include keyboards, mouses, touch screens, microphones, and various sensors, etc., output devices may include display screens, speakers, vibrators, and indicators, etc.

The communication interface 804 is configured to connect a communication module (not shown in the figure) to realize communication interaction between the device and other devices. The communication module may communicate in a wired manner (e.g., USB, or network cable, etc.) or a wireless manner (e.g., mobile network, WIFI, or Bluetooth, etc.).

The bus 805 includes a passage for transferring information between various components of the device (e.g., the processor 801, the memory 802, the input/output interface 803 and the communication interface 804).

It should be noted that although the above device is shown only with the processor 801, the memory 802, the input/output interface 803, the communication interface 804 and the bus 805, the device may further include other components necessary for normal operation in the specific implementation. In addition, those skilled in the art that can understand that the above-mentioned device may also include only the components necessary to implement the technical solution in the embodiments of the present disclosure, but may not necessarily include all the components shown in the drawings.

Those having ordinary skills in the art should understand: The discussion of any of the above embodiments is only exemplary, but is not intended to imply that the scope of the present application is limited to those embodiments; based on the concept of the present application, the technical features in the above embodiments or different embodiments may be combined, the steps may be implemented in any order, and many other variations may be existed in different aspects of the present application as described above, but are not provided herein in details for conciseness.

The present application is intended to encompass all such replacements, modifications and variations that fall in the broad scope of the embodiments of the present disclosure. Therefore, any omission, modification, equivalent replacement, or improvement made to the embodiments without departing from the spirit and the principle of the embodiments of present disclosure shall be deemed as falling in the protection scope of the present application.

## Claims

1. A manufacturing method with double-point incremental forming, comprising:
acquiring a three-dimensional model of a part to be formed;
slicing and layering the three-dimensional model to obtain a plurality of 2D curve paths, and respectively generating a primary working path of a master robot according to each 2D curve path;
determining and generating a support path of a slave robot according to the primary working path and the shape of the three-dimensional model for each primary working path; and
processing and manufacturing the part to be formed by applying a double-point incremental forming method according to the primary working path and the support path.

2. The method of claim 1, wherein the step of slicing and layering the three-dimensional model to obtain a plurality of 2D curve paths comprises:
layering the three-dimensional model along a forming direction according to a preset thickness by applying an offset on surface function, to establish a plurality of 2D curve paths.

3. The method of claim 2, wherein the preset thickness is determined by the size of a forming tool head and is within 0.5 to 2 mm.

4. The method of claim 1, wherein the step of generating a primary working path of a master robot according to the 2D curve path comprises:
dividing the 2D curve path into a plurality of discrete points at a preset interval, and establishing a series of planes according to a tangent plane direction of each discrete point in the curve, wherein the discrete points are central points of the planes;
setting the center points of the planes as the moving positions of the forming tool head, and setting normal Z-axes of the planes as the forming directions of the forming tool head; and
gathering the moving positions of all the discrete points in the 2D curve path and the forming directions corresponding to the moving positions to form the primary working path of the master robot.

5. The method of claim 1, wherein the step of determining and generating a support path of a slave robot according to the primary working path and the shape of the three-dimensional model comprises:
selecting a support strategy from a plurality of pre-stored candidate support strategies according to the primary working path and the shape of the three-dimensional model; and
generating the support path of the slave robot in accordance with the selected support strategy according to the primary working path and the shape of the three-dimensional model.

6. The method of claim 1, wherein the support path comprises: at least one of a local front support path, a local peripheral support path, a global support path and a following support path.

7. The method of claim 1, wherein the step of processing and manufacturing the part to be formed by applying a double-point incremental forming method according to the primary working path and the support path comprises:
controlling the forming tool head of the master robot to move according to the primary working path, while controlling a support tool head of the slave robot to move according to the support path, so as to finish the processing and manufacturing of the part to be formed.

8. A manufacturing apparatus with double-point incremental forming, comprising:
a model acquisition unit, configured for acquiring a three-dimensional model of a part to be formed;
a primary path acquisition unit, configured for slicing and layering the three-dimensional model to obtain a plurality of 2D curve paths, and respectively generating a primary working path of a master robot according to each 2D curve path;
a support path acquisition unit, configured for determining and generating a support path of a slave robot according to the primary working path and the shape of the three-dimensional model for each primary working path; and
a double-point processing and manufacturing unit, configured for processing and manufacturing the part to be formed by applying a double-point incremental forming method according to the primary working path and the support path.

9. An electronic device, comprising a memory, a processor and a computer program stored in the memory and executable on the processor, wherein the processor implements the method of any of claims 1-7 when it executes the program.

10. A computer storage medium on which at least one executable instruction is stored, the executable instruction instructs a processor to execute the method of any of claims 1-7.
